Europäisches Patentamt

**European Patent Office**

Office européen des brevets

(11) Numéro de publication: **0 062 584**

**B1**

(12) **FASCICULE DE BREVET EUROPÉEN**

(45) Date de publication du fascicule du brevet:
15.10.86

(51) Int. Cl.⁴: **B 64 G 1/66**, F 16 F 15/04, H 01 Q 1/12

(21) Numéro de dépôt: **82400606.8**

(22) Date de dépôt: **01.04.82**

(54) **Dispositif de montage pour supporter un composant, en particulier un miroir ou un réflecteur d'antenne dans un satellite.**

(30) Priorité: **03.04.81 FR 8106724**

(43) Date de publication de la demande:
**13.10.82 Bulletin 82/41**

(45) Mention de la délivrance du brevet:
**15.10.86 Bulletin 86/42**

(84) Etats contractants désignés:
**AT BE CH DE FR GB IT LI NL SE**

(56) Documents cité:
**FR-A-1 250 019
FR-A-1 362 687
FR-A-1 412 371
FR-A-2 180 252
FR-A-2 202 576
US-A-3 727 865**

(73) Titulaire: **R.E.O.S.C. (RECHERCHES ET ETUDES D'OPTIQUE ET DE SCIENCES CONNEXES), 10, rue des Ecoles, Ballainvilliers F-91160 Longjumeau (FR)**
Titulaire: **SOCIETE NATIONALE INDUSTRIELLE AEROSPATIALE Société dite:, 37 Boulevard de Montmorency, F-75781 Paris Cedex 16 (FR)**

(72) Inventeur: **Paseri, Jacques, 10, rue du Bon Noyer Fontenay- les- Briis, F-91640 Briis- sous- Forge (FR)**

(74) Mandataire: **Schrimpf, Robert, Cabinet Regimbeau 26, Avenue Kléber, F-75116 Paris (FR)**

LIBER, STOCKHOLM 1986

## Description

L'invention concerne un dispositif pour réaliser un montage stable d'une pièce fonctionnelle dans un support soumis à des conditions physiques sévères (vibrations, température, vieillissement) susceptibles de déformer le support, cette déformation exerçant sur la pièce suspendue des couples risquant de déformer la pièce et de nuire à son fonctionnement.

L'invention s'applique notamment au montage d'une pièce optique ou d'un réflecteur d'antenne dans un satellite.

On décrira, à titre d'exemple, la suspension d'un miroir (de télescope par exemple) dans un satellite.

On connaît des dispositifs pour monter un miroir dans un satellite, comme décrits par exemple dans les publications suivantes:
- publication conjointe du KITT PEAK NATIONAL OBSERVATORY et de l'Université de l'Arizona (juillet 1968) intitulée "Support and Testing of Large Astronomical Mirrors".
- article intitulé "Structural Design for Large Space Telescopes" publié par la NASA à la suite d'une conférence tenue du 29 avril au 1er mai 1969,
- article intitulé "LST Phase a study", volume 3 "Design Analysis and trade studies", de OPTICAL SYSTEMS DIVISION de KOLLSMAN INSTRUMENT CORPORATION (rapport final du 8 janvier 1973),
- brevets FR-A-2 180 252 et US-A-3 832 040.

Les dispositifs de montage connus comprennent des rotules ou des combinaisons de rotules et de lames élastiques.

Ces rotules, seules ou combinées, présentent des inconvénients:
- introduction de jeux dans les liaisons soit par construction, soit sous l'effet des vibrations lors du lancement du satellite,
- comportement dans le temps difficilement prévisible,
- grippage lors du fonctionnement dans le vide.

Il en résulte que la stabilité de la pièce suspendue n'est pas assurée et n'est généralement pas suffisante.

Un but de l'invention est de fournir un dispositif de montage sans rotule.

Un but de l'invention est de fournir un dispositif de montage sans jeu ni frottement dans les liaisons de montage.

Un but de l'invention est de fournir un dispositif de suspension tel que les couples transmis à la pièce suspendue ne sont fonction que des déformations du support de la pièce et sont inférieurs à environ 0,1 Newton.Mètre.

Le dispositif de l'invention utilise une combinaison de lames flexibles.

On connaît (FR-A- 250 019) un dispositif de montage d'un objet dans un support qui comprend un élément flexible fixé rigidement au support et qui s'étend en direction de l'objet et une pièce intermédiaire solidaire du premier élément flexible et dans laquelle est fixée sans jeu une extrémité de chaque élément d'un couple d'éléments flexibles selon le préambule de la revendication 1, ce dispositif étant conçu pour que l'objet supporté puisse exécuter un mouvement de translation limité dans n'importe quelle direction par rapport à son support.

La présente invention utilise également une combinaison d'éléments flexibles mais de façon à empêcher un déplacement de la pièce supportée par rapport à son support tout en évitant que les déformations éventuelles du support soient transmises à la pièce.

L'invention a ainsi pour objet un dispositif selon la revendication 1.

Les revendications dépendantes 2 à 11 concernent des modes particulier de réalisation de l'invention.

La pièce à suspendre au support est normalement suspendue au moyen de trois dispositifs de liaison tels que définis ci-dessus, répartis à 120° autour de la pièce à suspendre.

Lorsque la pièce fonctionnelle fonctionne suivant un axe principal (par exemple l'axe optique du miroir ou l'axe du réflecteur de l'antenne), ledit premier axe est parallèle ou orthogonal à cet axe principal.

Lorsque la pièce fonctionnelle s'étend essentiellement selon une surface, ledit premier axe est perpendiculaire à cette surface ou bien cette surface est parallèle au plan déterminé par ledit premier axe et par l'un desdits deuxième et troisième axes.

Les deux lames croisées d'un couple de lames font entre elles un angle qui, de préférence, est égal à 60° ou 90°.

Les pièces auxquelles sont fixées les lames flexibles sont des blocs constitués de préférence par un ou plusieurs prismes: elles sont donc faciles à usiner.

Les lames flexibles s'étendent dans des plans comme cela a été indiqué mais leur forme dans le plan est choisie à volonté. En particulier lorsqu'il s'agit de plans sécants, les formes sont étudiées pour que les lames ne se rencontrent pas: elle sont donc croisées.

On décrira ci-après un montage conforme à la présente invention, en référence aux figures du dessin joint sur lequel:
- la figure 1 est un schéma général d'un miroir et d'un support auquel il doit être suspendu;
- la figure 2 est une perspective schématique d'un dispositif de liaison conforme à l'invention entre la pièce et le support;
- la figure 3 est une perspective d'un exemple de réalisation du dispositif de liaison;
- la figure 4 est une vue du dispositif de liaison dansun plan perpendiculaire au plan de la première lame flexible du dispositif, et
- la figure 5 est une vue du dispositif de liaison de la figure 4 depuis le dessus de la première lame flexible.

Dans l'exemple représenté, la pièce optique est un miroir 1 de centre C qui s'étend dans un plan OX, OY et dont l'axe optique s'étend parallèlement à OZ.

Ce miroir est suspendu dans un support ou barillet 2.

La suspension du miroir est assurée par trois dispositifs de liaison répartis sur la périphérie du miroir. On ne décrira que l'un de ces dispositifs de liaison, les autres dispositifs étant identiques.

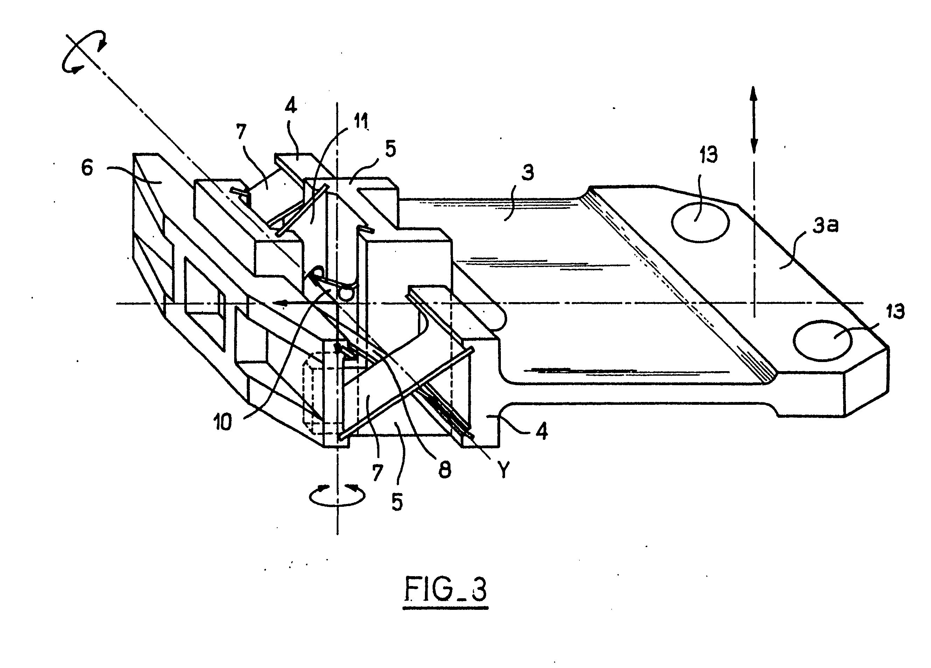

Ce dispositif de liaison comprend une lame flexible plane 3 dont une extrémité 3a est fixée au barillet, par exemple par des vis (dont on aperçoit les trous de passage 13 sur les réalisations des figures 3 et 5).

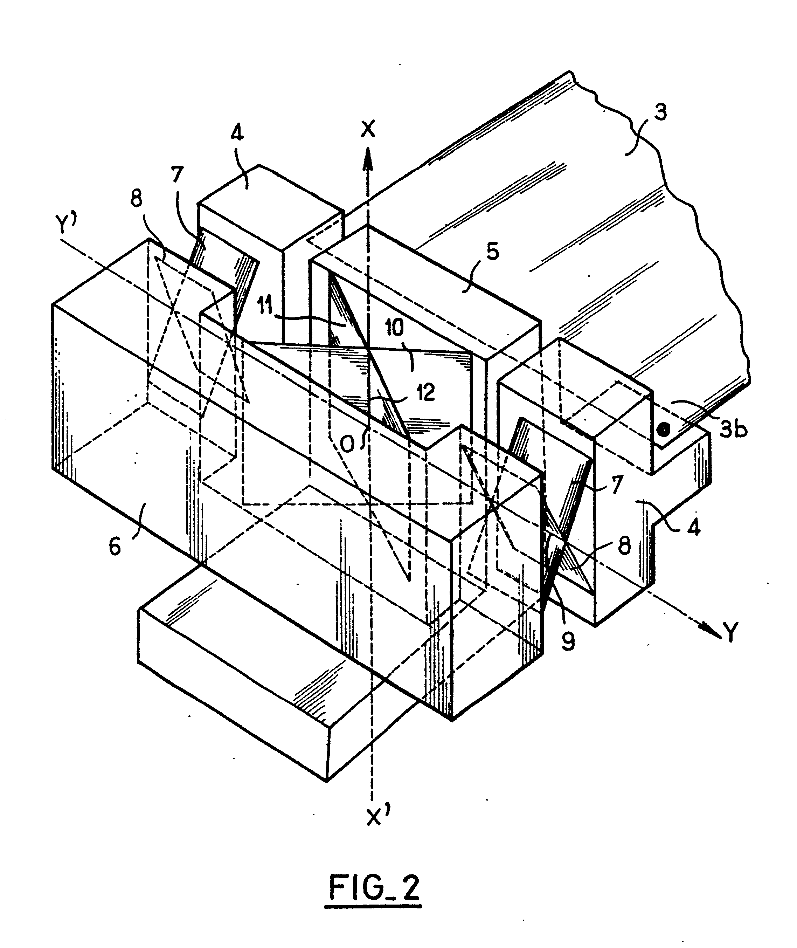

A son autre extrémité 3b, la lame est solidaire (figure 2) de deux pièces 4 par exemple en forme de T, dont la fonction sera expliquée plus loin.

La lame 3 s'étend en direction de la bordure du miroir suivant l'axe OZ.

Une pièce 5, disposée entre les pièces 4, est fixée au miroir. Cette pièce 5 constitue par exemple une équerre.

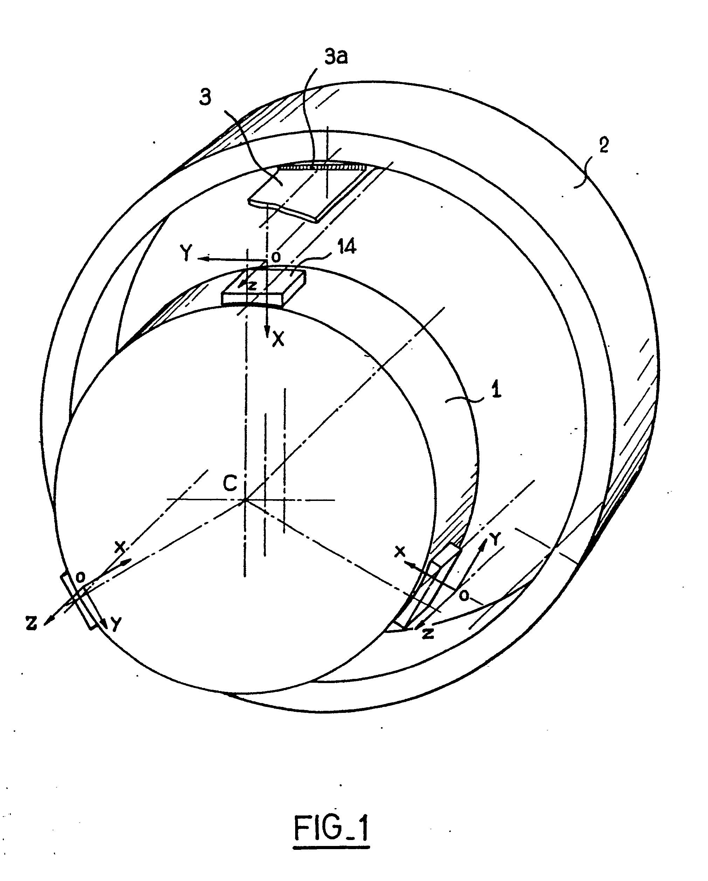

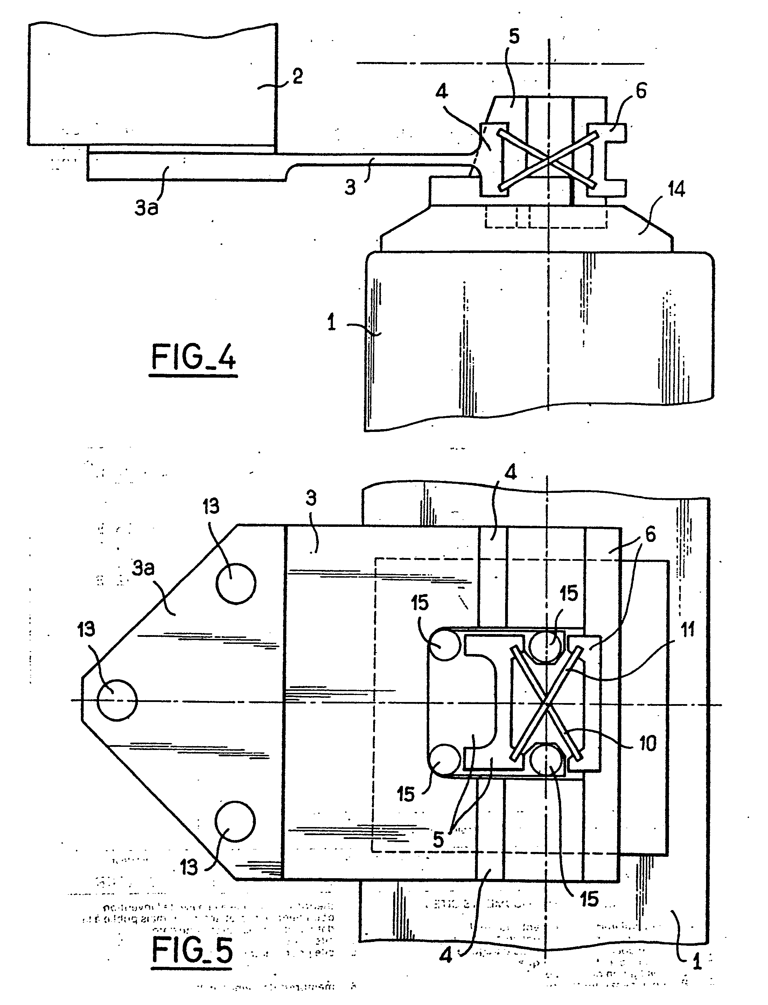

Par exemple, la pièce 5 est vissée à un patin 14 (figures 1, 4) collé sur la tranche du miroir. Sur la figure 5, on aperçoit les trous de passage 15 de ces vis.

Les pièces 4 et 5 présentent des faces en vis à vis de faces correspondantes d'une pièce 6. Ces facés sont de préférence planes.

Les faces en vis à vis sont reliées par des couples de lames croisées planes qui pénètrent dans des rainures des faces et y sont fixées sans jeu par soudure ou par collage.

Les deux lames croisées de chaque couple sont disposées dans deux plans sécants et, sur la figure 2, on n'a pas représenté les lames mais les plans sécants dans lesquels elles se trouvent.

On voit sur la figure que chaque pièce 4 est reliée à la pièce 6 par deux lames dont les plans sécants 7 et 8 ont une intersection 9 disposée suivant l'axe Y'OY tandis que les pièces 5 et 6 sont reliées par des lames croisées qui se trouvent dans des plans sécants 10 et 11 dont l'intersection 12 est disposée suivant l'axe X'OX.

Les lames flexibles sont par exemple des lames en acier.

Les lames flexibles sont des lames élastiques minces d'épaisseur comprise entre 1 et 3 mm, de préférence.

Par exemple:

Lame 3 (qui travaille en flexion): section 80 x 2,5 mm

Lames 10,11: section 25 x 1,4 mm

Lames 7,8: section 50 x 1,2 mm

Les longueurs des lames sont par exemple 15 à 30 mm (Lames 7, 8, 10, 11) et 80 à 100 mm (lame 3). Les profondeurs d'encastrement sont par exemple de l'ordre de 1 mm.

Dans le cas d'une rotation autour de OX ce sont les lames 10 et 11 qui entrent en jeu tandis que pour une rotation autour de OY ce sont les lames 7 et 8 qui entrent en jeu.

Dans les réalisations des figures 3 à 5, les deux pièces 4 et la lame 3 sont formées dans une seule et même pièce convenablement usinée pour présenter une partie mince formant lame flexible 3 et deux parties épaisses formant des blocs rigides 4.

Le nombre des couples de lames croisées et le nombre des pièces 4, 5, 6 peuvent varier selon les réalisations.

Par exemple, dans une variante, le dispositif comprend une seule pièce 4 entre deux pièces 5.

Dans les réalisations représentées, la lame flexible 3 est tangente au miroir et parallèle à l'axe optique du miroir. En variante, cette lame est tangentielle au miroir et orthogonale à l'axe optique du miroir.

## Revendications

1. Dispositif de montage pour supporter une pièce fonctionnelle (1) dans un support (2), qui comporte un premier élément flexible (3) fixé rigidement audit support (2) et qui s'étend suivant un premier axe en direction de la pièce fonctionnelle (1), une pièce (4) solidaire du premier élément flexible et dans laquelle sont fixées sans jeu une extrémité de chaque élément d'au moins un couple d'éléments flexibles (7, 8) et une pièce (5) solidaire de la pièce fonctionnelle (1) et dans laquelle sont fixées sans jeu une extrémité de chaque élément d'un autre couple d'éléments flexibles (10, 11), caractérisé en ce que ledit premier élément flexible est une lame flexible (3), en ce que ledit couple d'éléments est un couple de lames flexibles croisées (7, 8) qui s'étendent dans deux plans sécants dont l'intersection (9) est parallèle à un deuxième axe, en ce que ledit autre couple d'éléments est un couple de lames flexibles croisées (10, 11) qui s'étendent dans deux plans sécants dont l'intersection (12) est parallèle à un troisième axe, lesdits premier, deuxième et troisième axes étant disposés suivant les trois directions d'un trièdre trirectangle, et en ce qu'il comporte une pièce intermédiaire (6) dans laquelle sont fixées sans jeu les autres extrémités des deux lames de chaque couple (7, 8; 10, 11), les lames flexibles coopérant pour permettre une translation suivant un axe et des rotations suivant deux axes.

2. Dispositif selon la revendication 1, caractérisé en ce que les extrémités des lames (7, 8; 10, 11) des couples sont encastrées dans les pièces (4, 6; 5, 6) auxquelles elles sont fixées.

3. Dispositif selon la revendication 1 ou 2, caractérisé en ce que la pièce (4) solidaire de la première lame flexible (3) et la pièce (5) solidaire de la pièce fonctionnelle (1) sont situées en vis à vis de la pièce intermédiaire (6).

4. Dispositif selon l'une des revendications 1 à 3, caractérisé en ce que la pièce (5) solidaire de la pièce fonctionnelle (1) est située entre deux pièces (4, 4) solidaires de la lame flexible (3) ou vice versa.

5. Dispositif selon la revendication 1, caractérisé en ce que la pièce (4) solidaire de la lame flexible (3) et la lame flexible (3) constituent deux parties d'une seule et même pièce.

6. Dispositif selon l'une des revendications 1 à 5, caractérisé en ce qu'il coopère avec deux autres dispositifs de montage identiques, situés à des intervalles de 120° sur un cercle autour de la pièce fonctionnelle, pour le montage de la pièce fonctionnelle.

7. Dispositif selon l'une des revendications 1 à 6, caractérisé en ce que la pièce fonctionnelle (1) est une pièce optique.

8. Dispositif selon la revendication 7, caractérisé en ce que la pièce optique est un miroir (1).

9. Dispositif selon la revendication 7 ou 8, caractérisé en ce que la pièce optique (1) a un axe optique parallèle ou orthogonal audit premier axe.

10. Dispositif selon l'une des revendications 1 à 6, caractérisé en ce que la pièce fonctionnelle (1) est un réflecteur d'antenne.

11. Dispositif selon l'une des revendications 1 à 10, caractérisé en ce que le support (2) de la pièce fonctionnelle est embarqué à bord d'un satellite.


## Claims

1. Mounting device for supporting a functional piece (1) in a support (2), which has a first flexible element (3) fixed rigidly to the said support (2) and which is extended on a first axis in the direction of the functional piece (1), a piece (4) rigid with the first flexible element and in which are fixed without play an end of each element of at least one couple of flexible elements (7, 8) and a piece (5) rigid with the functional piece (1) and in which are fixed without play an end of each element of another couple of flexible elements (10, 11), characterised in that the said first flexible element is a flexible blade (3), in that the said couple of elements is a couple of crossed flexible blades (7, 8) which are extended in two intersecting planes of which the intersection (9) is parallel to a second axis, in which the said other couple of elements is a couple of crossed flexible blades (10, 11) which are extended in two crossing planes of which the intersection (12) is parallel to a third axis, the said first, second and third axes being arranged in three directions of a trirectangular trihedron, and in that it comprises an intermediary piece (6) in which are fixed without play the other ends of the two blades of each couple (7,8; 10,11), the flexible blades cooperating for permitting a translation along an axis and rotations on two axes.

2. A device according to claim 1, characterised in that the ends of the blades (7, 8; 10, 11) of the couples are embedded in the pieces (4, 6; 5, 6) to which they are fixed.

3. A device according to claim 1 or claim 2, characterised in that the piece (4) rigid with the first flexible blade (3) and the piece (5) rigid with the functional piece (1) are situated opposite the intem ediary piece (6).

4. A device according to any one of claims i to 3, characterised in that the piece (5) rigid with the functional piece (1) is situated between two pieces (4, 4) rigid with the flexible blade (3) or vice versa.

5. A device according to claim 1, characterised in that the piece (4) rigid with the flexible blade (3) and the flexible blade (3) constitute two parts of one and the same piece.

6. A device according to any one of claims 1 to 5, characterised in that it co-operates with two other identical mounting devices, situated at intervals of 120° on a circle about the functional piece, for the mounting of the functional piece.

7. A device according to any one of claims 1 to 6, characterised in that the functional piece (1) is an optical piece.

8. A device according to claim 7, characterised in that the optical piece is a mirror (1).

9. A device according to claim 7 or claim 8, characterised in that the optical piece (1) has an optical axis parallel or at right angles to the said first axis.

10. A device according to any one of claims 1 to 6, characterised in that the functional piece (1) is an antenna reflector.

11. A device according to any one of claims 1 to 10, characterised in that the support (2) of the functional piece is embarked on board a satellite.


## Patentansprüche

1. Montagevorrichtung zur Abstützung/eines Funktionsteiles (1) an einem Träger (2), die ein erstes flexibles Element (3), das fest am genannten Träger (2) fixiert ist und das sich gemäß einer ersten Achse in Richtung des Funktionsteiles (1) erstreckt, einen Teil (4), der mit dem ersten flexiblen Element fest verbunden ist und in dem ein Ende eines jeden Elementes mindestens eines Paares von flexiblen Elementen (7, 8) ohne Spiel fixiert ist, und einen Teil (5) umfaßt, der mit dem Funktionsteil (1) fest verbunden ist und in dem ein Ende eines jeden Elementes eines weiteren Paares von flexiblen Elementen (10, 11) ohne Spiel fixiert ist, dadurch gekennzeichnet, daß das genannte erste, flexible Element eine flexible Lamelle (3) ist, daß das genannte Paar von Elementen ein Paar von gekreuzten flexiblen Lamellen (7, 8) ist, die sich in zwei schneidenden Ebenen erstrecken, deren Schnittlinie (9) parallel zu einer zweiten Achse liegt, daß das genannte weitere Paar von Elementen ein Paar von gekreuzten flexiblen Lamellen (10, 11) ist, die sich in zwei schneidenden Ebenen erstrecken, deren Schnittlinie (12) parallel zu einer dritten Achse liegt, wobei die genannte erste, zweite und dritte Achse gemäß den drei Richtungen eines rechtwinkeligen Koordinatendreibeins angeordnet sind, und daß sie einen Zwischenteil (6) umfaßt, in dem die anderen Enden der zwei Lamellen eines jeden Paares (7, 8; 10, 11) ohne Spiel fixiert sind, wobei die flexiblen Lamellen zusammenarbeiten, um eine Translation gemäß

einer Achse und Rotationen um zwei Achsen zu erlauben.

2. Vorrichtung nach Anspruch 1, dadurch gekennzeichnet, daß die Enden der Lamellen (7, 8; 10, 11) der Paare in den Teilen (4, 6; 5, 6), an denen sie fixiert sind, versenkt sind.

3. Vorrichtung nach Anspruch 1 oder 2, dadurch gekennzeichnet, daß der mit der ersten flexiblen Lamelle (3) fest verbundene Teil (4) und der mit dem Funktionsteil (1) fest verbundene Teil (5) gegenüber dem Zwischenteil (6) liegen.

4. Vorrichtung nach einem der Ansprüche 1 bis 3, dadurch gekennzeichnet, daß der mit dem Funktionsteil (1) fest verbundene Teil (5) zwischen zwei mit der flexiblen Lamelle (3) fest verbundenen Teilen (4, 4) liegt, oder umgekehrt.

5. Vorrichtung nach Anspruch 1, dadurch gekennzeichnet, daß der mit der flexiblen Lamelle (3) fest verbundene Teil (4) und die flexible Lamelle (3) zwei Teile ein und desselben Stückes darstellen.

6. Vorrichtung nach einem der Ansprüche 1 bis 5, dadurch gekennzeichnet, daß sie mit zwei weiteren identischen Montagevorrichtungen zusammenarbeitet, die zum Anbau des Funktionsteiles in Intervallen von 120° auf einem Kreis um den Funktionsteil liegen.

7. Vorrichtung nach einem der Ansprüche 1 bis 6, dadurch gekennzeichnet, daß der Funktionsteil (1) ein optischer Bauteil ist.

8. Vorrichtung nach Anspruch 7, dadurch gekennzeichnet, daß der optische Bauteil ein Spiegel (1) ist.

9. Vorrichtung nach Anspruch 7 oder 8, dadurch gekennzeichnet, daß der optische Bauteil (1) eine optische Achse parallel oder senkrecht zur genannten ersten Achse hat.

10. Vorrichtung nach einem der Ansprüche 1 bis 6, dadurch gekennzeichnet, daß der Funktionsteil (1) ein Antennenreflektor ist.

11. Vorrichtung nach einem der Ansprüche 1 bis 10, dadurch gekennzeichnet, daß der Träger (2) des Funktionsteiles an Bord eines Satelliten verladen ist.

## FIG_1

FIG_2

FIG_3

FIG_4

FIG_5